# EUROPEAN PATENT APPLICATION

(11) **EP 3 670 608 A1**
(43) Date of publication of application: **24.06.2020**
(21) Application number: 18215133.2
(22) Date of filing: 21.12.2018
(51) Int. Cl.: C09B 67/08, C09D 5/28

(54) **ENVIRONMENTALLY STABLE ORGANIC PIGMENTS**

(71) Applicant: Clariant Plastics & Coatings Ltd, 4132 Muttenz (CH)
(72) Inventor: The designation of the inventor has not yet been filed
(74) Representative: Jacobi, Carola

(57) **Abstract**

The invention relates to environmentally stable organic pigment which is modified by a polymer and characterized by a change of Delta E (dE) of less than 5 after 2000 h simulated accelerated weathering measured according to DIN EN ISO 11341 in silicone paint.

## Description

The present application is directed to environmentally stable organic pigments, an aqueous dispersion containing environmentally stable organic pigments, a method of preparing environmentally stable organic pigments and the use of environmentally stable organic pigments for façade and exterior decorative coatings.

Pigments can be classified into inorganic and organic pigments and are insoluble in its applied application form, typically as a particle suspension. Organic pigments are purely of synthetic origin and are characterized by small particle sizes with high surface areas. Different to many inorganic heavy metal oxide pigments, organic pigments are non-toxic, show generally higher tinting strength and better colour brilliance. This means that less pigments are necessary to achieve the same colour coverage e.g. for a painted wall.

Outdoor paints are used everywhere to protect, colour or to provide texture to civil engineered structures made of concrete, steel, wood and other materials. Besides pigments, these paints comprise mainly binder dispersed in a liquid matrix. Typical binder systems for outdoor paints are acrylics, styrene-acrylics, vinyl-acrylics, vinyl acetate/ethylene copolymers, polyurethanes, polyesters, melamine resins, alkyds, silicates and silicones.

Concrete and other façade materials are usually porous in nature, allowing oxygen and soluble salts to penetrate through the plaster cast. It is a very reactive substrate and along with UV radiation and moisture would cause degradation to most unprotected organic pigments. Outdoor paints applied to such reactive high surface areas would require thus high pigment volume concentrations. Additionally, over a period of time, concrete surfaces produce hydrates like calcium hydroxide, which makes the coating environment alkaline with pH values reaching 12 to 13. Such alkaline conditions also attack conventional unprotected organic pigments.

Within the state of the art outdoor paints contain almost exclusively inorganic pigments due to their higher environmental stability towards harsh impact of UV light, temperature and pH changes and varying moisture conditions. Inorganic pigments, however, are available in only very limited color shades, which lack of color brilliance and tinting strength. Organic pigments on the other hand, come in any colour and cover the full spectrum of available colour shades. Common organic pigments are derived from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments and carbon black.

Since organic pigments do generally not exhibit the necessary weather fastness and fade out over time, there is a high need to widen the available colour spectrum by using environmentally stable organic pigments in façade and outdoor decorative paints.

In order to use organic pigments in façade and outdoor applications, the environmentally unstable pigments have to be protected from degradation.

Known protections methods include for instance polymeric coatings.

US8703865B2 teaches the formation of a polymer shell around an organic pigment core by means of a mini emulsion polymerization using reactive monomers.

JP 2005/047989 teaches an ink composition whereby a solvent-dispersed pigment is mixed with a water-soluble polyurethane resin and heated for 3 to 6 days at temperatures between 40 and 70°C. Both methods are very time-consuming and thus very costly in an industrial production setup.

Therefore, there is still a high need for environmentally stable organic pigments, which are applicable in façade and exterior decorative coatings.

The present invention solves this problem and relates to environmentally stable organic pigments which are modified by a polymer in such a way that a change of Delta E (dE) is less than 5 after 2000 h simulated weathering measured according to DIN EN ISO 11664-4 in a silicone paint.

In response to the need for a higher environmental stability of organic pigments towards weathering fastness, the present invention teaches how to make environmentally stable organic pigments and how to effectively use those materials in façade and outdoor paint formulations.

Within the present application, the term "organic pigments" refers to coloured particles, which are of purely synthetic origin, comprised of carbon-based molecules insoluble but dispersible in the used paint formulation. In particular colour shades based on the inventive environmentally stabilized organic pigments from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments allow façade colours of higher brilliance and brightness. The environmentally stable organic pigments according to the present invention have been found to be particularly advantageous in silicon paints.

Within the present application, the term "environmentally stable organic pigments" refers to organic pigments, which are modified by a polymer in such a way that their change in dE is less than 5 after 2000 h accelerated weather fastness in a silicone paint. dE refers to the International Commission on Illumination (CIE) based on their CIELAB colour space and is measured according to DIN EN ISO 11664-4.

Within the present invention, the term "accelerated weather fastness" refers to a testing equipment, which exposes the tested paint formulations through different weather cycles varying temperature, humidity and UV intensity. The accelerated weather fastness is measured according to DIN EN ISO 2810 (Paints and varnishes - Natural weathering of coatings - Exposure and assessment) and DIN EN ISO 11341 (Paints and varnishes - Artificial weathering and exposure to artificial radiation - Exposure to filtered xenon-arc radiation).

Within the present invention the term "aqueous organic pigment dispersion" refers to organic pigments which are dispersed in water with the help of a wetting or dispersing agent, which are well known to people skilled in the art.

The disclosed organic pigment dispersions may be made by blending or grinding together the disclosed pigment particles, polymeric dispersing agent, a carrier and an optional surfactant. Without intending to be bound by theory, the grind process may involve deagglomeration of pigment particles (induced for example by shear or other forces in the stirred pigment grind dispersion), and the wetting or dispersing agent may help wet out the newly-exposed pigment surface area, electrostatically (or otherwise) stabilize the deagglomerated particles, and prevent or discourage them from reagglomerating.

The wetting or dispersing agent accordingly may promote more efficient pigment particle use and increase the extent to which such particles scatter light and colour the disclosed coating compositions.

The wetting or dispersing agent may for example be a bulk polymer, solution polymer or a water-dispersible polymer, and may for example be anionic, cationic or non-ionic in nature and is well-known to people skilled in the art. Examples of typically used dispersing agents are Dispersogen PTS and PL30 from Clariant, Solsperse 27000 from Lubrizol or DISPERBYK-190 from BYK-Chemie GmbH. The wetting or dispersing agent may be used as single component or as a mixture of different wetting and/or dispersing agents and for example represent at least 0.1, at least 0.3, at least 0.5, or at least 1 % by weight, and up to 25, up to 20, or up to 10 % by weight of the organic pigment particle weight.

Within the present application, the term "polymer" refers to a molecule whose structure is composed of multiple repeating units, from which originates a characteristic of high relative molecular mass and attendant properties. The units composing polymers derive from molecules of low relative molecular mass, so called "monomers". Polymers may be of synthetic or natural origin. Within the present application, the term "polymer" refers to polymers of synthetic origin.

The polymers may be obtained from monomers for polyaddition reactions. In this case the polymer is formed successively from monomers without elimination of by-products.

An example of this is the preparation of polyurethanes from polyfunctional hydroxy compounds and polyfunctional isocyanates; the preparation of polyureas from polyfunctional amines and polyfunctional isocyanates; the preparation of polyhydroxycarboxylic acids, polyamino acids, polyamides, polyesters, polyimides, polycarbonates, amino resins, phenolic resins, and polysulfides; and the preparation of polyepoxides from polyfunctional epoxides and polyfunctional amines, thiols and/or hydroxy compounds. Polyepoxides are adducts, for example, of diglycidyl ether, butadiene epoxide or novolak-based polyepoxy resins with polyhydric alcohols, especially glycols, preferably hexanediol.

The polymers can also be synthesized from the appropriate monomers by means of polycondensation reactions. Polycondensation reactions take place in stages with elimination of by-products. Examples include unipolycondensations, which take place with the involvement of a single monomer, a hydroxycarboxylic acid or an amino acid, for example, or in which two different monomers are involved, examples being the preparation of polyamides from polyfunctional carboxylic acids and polyfunctional amines or the preparation of polyesters from polyfunctional carboxylic acids and polyfunctional hydroxy compounds. Another example of polycondensations are copolycondensations, where more than two different monomers are involved. Other polymers as well can be prepared by polycondensation from the corresponding monomers, examples being polyimides, polycarbonates, amino resins, phenolic resins, polysulfides or urea resins.

The polymers can be synthesized from free-radically polymerizable monomers from the group of acrylic acid, acrylic esters, acrylonitrile, acrylamides, methacrylic acid, methacrylic esters, ethylene, vinyl alcohols, vinyl ethers, vinylamines, vinyl acetates, vinyl esters, styrenes, maleic esters, maleic anhydride, and maleic acid.

Within the present invention the term "aqueous polymer dispersion" refers to a polymer dispersed or emulsified in water. Such polymer dispersions and emulsions comprise any one or a combination of acrylic, polyester, polyurethane, polyester-polyurethane, epoxy resin, vinyl chloride resin, vinyl ester resin, ethylene vinyl ester, styrene, styrene acrylic resin, styrene acrylonitrile resin, polyimide, polycarbonate, amino resin, phenolic resin, polysulfide, urea resins, polyethylene (meth) acrylic acid copolymers, carboxylated polybutadiene, perfluorinated sulfonic acid polymers and are well known to people skilled in the art.

Within another particularly preferred embodiment of the present invention, the polymer used for environmental stabilization is an "aqueous polyurethane resin", which refers to aqueous dispersions of ionic or non-ionic polymers containing urethane groups and optionally urea groups, as that term is understood by those of ordinary skill in the art.

Such aqueous polyurethane resins are typically prepared by a multi-step process in which an isocyanate (N=C=O, NCO) prepolymer which has excess NCO groups is initially formed and subsequently chain terminated with a monofunctional isocyanate reactive group, or chain extended in the aqueous phase. For the urea terminated polyurethane it is the NCO prepolymer which is reacted with a primary or secondary amine to produce the urea termination of the polyurethane.

Typically, in the first stage of prepolymer formation, a diisocyanate is reacted with a compound chosen from isocyanate-reactive polyols and compounds containing one or more isocyanate-reactive groups and at least one acid or acid salt group to form an intermediate product. The molar ratio of the isocyanate groups to the isocyanate-reactive groups is such that the equivalents of isocyanate functionality are greater than the equivalents of isocyanate-reactive functionality, resulting in an intermediate product terminated by at least one NCO group. Thus, the molar ratio of isocyanate groups to isocyanate-reactive groups is at least about 1.01 to 1.4:1, optionally 1.05 to 1.25:1 and more suitably 1.1 to 1.15:1. As an example, diisocyanates are reacted with diols in the presence of other diols with ionic groups to produce an isocyanate-rich prepolymer which is then reacted further. In general, the isocyanates, and isocyanate reactive compounds can be combined in any convenient order.

Suitable diisocyanates for reacting with the isocyanate-reactive compound containing ionic groups (or groups which can be rendered ionic via, for example, neutralization) are those which contain either aromatic, cycloaliphatic or aliphatic-bound isocyanate groups.

Examples of suitable diisocyanates include cyclohexane-1,3- and -1,4-diisocyanate; 1-isocyanato-3-isocyanatomethyl-3,5,5-trimethyl-cyclohexane (isophorone diisocyanate or IPDI); bis-(4-isocyanatocyclohexyl)-methane; 1,3- and 1,4-bis-(isocyanatomethyl)-cyclohexane; 1-isocyanato-2-isocyanatonnethyl cyclopentane; bis-(4-isocyanatocyclohexyl)-methane; 2,4'-diisocyanato-dicyclohexyl methane; bis-(4-isocyanato-3-methyl-cyclohexyl)-methane, alpha,alpha,alpha',alpha'-tetramethyl-1,3- and/or -1,4-xylylene diisocyanate; 1-isocyanato-1-methyl-4(3)-isocyanatomethyl cyclohexane; and 2,4- and/or 2,6-hexahydrotoluoylene diisocyanate.

Additional diisocyanates may be linear or branched and contain 4 to 12 carbon atoms, optionally 4 to 8 carbon atoms and more suitably 6 carbon atoms, which include 1,4-tetramethylene diisocyanate; 1,6-hexamethylene diisocyanate; 2,2,4-trimethyl-1,6-hexamethylene diisocyanate; and 1,12-dodecamethylene diisocyanate. 1,6-hexamethylene diisocyanate are especially useful. Also useful is isophorone diisocyanate.

Isocyanate-reactive compounds containing acid groups, i.e., carboxylic acid groups, carboxylate groups, sulphonic acid groups, sulphonate groups, phosphoric acid groups and phosphonate groups, are chemically incorporated into the polyurethane to provide hydrophilicity and enable the polyurethane to be stably dispersed in an aqueous medium. The acid salts are formed by neutralizing the corresponding acid groups either prior to, during or after formation of the NCO prepolymer isocyanate-reactive compounds containing carboxylic acids or carboxylic acid salts can be used.

The neutralizing agents for converting the carboxylic acid groups to carboxylate salt groups are described in the preceding U.S. patents and are also discussed hereinafter. Within the context of this invention, the term "neutralizing agents" is meant to embrace all types of agents which are useful for converting carboxylic acid groups to hydrophilic carboxylate salt groups.

Examples of these hydroxy-carboxylic acids include citric acid, tartaric acid and hydroxypivalic acid.

Suitable higher molecular weight polyols containing at least two hydroxy groups, which may be reacted with the other components to prepare the NCO prepolymers, are those having a molecular weight of more than 200 to less than 10,000 Da, more preferably of more than 300 to less than 6,000 Da and most preferably of more than 400 to less than 5,000 Da. The molecular weights are number average molecular weights (Mn) and are determined by end group analysis (OH number). Examples of these high molecular weight compounds include polyester polyols, polyether polyols, polyhydroxy polycarbonates, polyhydroxy polyacetals, polyhydroxy polyester amides and polyhydroxy polythioethers. A combination of the polyols can also be used in the polyurethane.

Suitable polyester polyols include reaction products of polyhydric, optionally dihydric alcohols to which trihydric alcohols may be added and polybasic, optionally dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids may be aliphatic, cycloaliphatic, aromatic and/or heterocyclic and they may be substituted, for example, by halogen atoms, and/or unsaturated. The following are mentioned as examples: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, e.g., ethylene glycol; propylene glycol-(1, 2) and -(1,3); butylene glycol-(1,4) and -(1,3); hexanediol-(1,6); octanediol-(1,8); neopentyl glycol; cyclohexanedimethanol (1,4-bis-hydroxymethyl-cyclohexane); 2-methyl-1,3-propanediol; 2,2,4-trimethyl-1,3-pentanediol; triethylene glycol; tetraethylene glycol; polyethylene glycol; dipropylene glycol; polypropylene glycol; dibutylene glycol and polybutylene glycol, glycerin and trimethylol-propane. The polyesters may also contain a portion of carboxyl end groups. Polyesters of lactones, for example, epsilon-caprolactone, or hydroxycarboxylic acids, for example, omega-hydroxycaproic acid, may also be used.

Polycarbonates containing hydroxyl groups include those known, per se, such as the products obtained from the reaction of diols such as propanediol-(1,3), butanediol-(1,4) and/or hexanediol-(1,6), diethylene glycol, triethylene glycol or tetraethylene glycol with phosgene, diarylcarbonates such as diphenylcarbonate or with cyclic carbonates such as ethylene or propylene carbonate. Also suitable are polyester carbonates obtained from the above-mentioned polyesters or polylactones with phosgene, diaryl carbonates or cyclic carbonates.

Suitable polyether polyols are obtained in known manner by the reaction of starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides or other means to obtain an alpha omega substituted diol. Especially useful polyether compounds are those that are derived from 1,3 to 1,12 diols. Examples of these include 1,3-propanediol, 1,4-butanediol, 1,8-octanediol and the like.

Other optional compounds for preparing the NCO prepolymer include low molecular weight, at least difunctional isocyanate-reactive compounds having an average molecular weight of up to 400. Examples include the dihydric and higher functionality alcohols, which have previously been described for the preparation of the polyester polyols and polyether polyols.

In addition to the above-mentioned components which can be difunctional in the isocyanate polyaddition reaction, mono-functional and even small portions of trifunctional and higher functional components generally known in polyurethane chemistry, such as trimethylolpropane or 4-isocyanantomethyl-1,8-octamethylene diisocyanate, may be used in special cases in which slight branching of the NCO prepolymer or polyurethane is desired. However, the NCO prepolymers should be substantially linear and this may be achieved by maintaining the average functionality of the prepolymer starting components at or below 2.1.

Process conditions for preparing the NCO prepolymers are well known by persons with skill in the art. The finished NCO prepolymer should have a free isocyanate content of about 1 to about 20% by weight, optionally about 1 to about 10% by weight, based on the weight of prepolymer solids.

The polyurethanes are typical prepared by chain terminating or chain extending these NCO prepolymers.
The chain terminating agent is a primary or secondary amine which is added to form a urea termination. The amount of chain terminator employed should be approximately equivalent to the free isocyanate groups in the prepolymer,

The ratio of active hydrogens in the chain terminator to isocyanate groups in the prepolymer can be in the range from about 1.0:1.0 to about 1.2:1.0, optionally from about 1.0:1.1 to about 1.1:1.0, on an equivalent basis. Although any isocyanate groups that are not terminated with an amine can react with water the ratios of chain termination to isocyanate group is chosen to assure a urea termination. Amine termination of the polyurethane is avoided by the choice and amount of chain terminating agent leading to a urea terminated polyether diol polyurethane which has better molecular weight control and better properties for use in environmentally stable organic pigment systems.

Any primary or secondary monoamines reactive with isocyanates may be used as chain terminators. Aliphatic primary or secondary monoamines can be used effectively. Example of monoamines useful as chain terminators include but are not restricted to butylamine, hexylamine, 2-ethylhexyl amine, dodecyl amine, diisopropanol amine, stearyl amine, dibutyl amine, dinonyl amine, bis(2-ethylhexyl)amine, diethylamine, bis(methoxyethyl)amine, N-methylstearyl amine and N-methyl aniline. An optional isocyanate reactive chain terminator is bis(methoxyethyl)amine. The bis(methoxyethyl)amine is part of a class of urea terminating reactants where the substituents are non-reactive in the isocyanate chemistry, but have nonionic hydrophilic groups. This nonionic hydrophilic group provides the urea terminated polyether diol polyurethane with more water compatible.

The urea content in percent of the polyurethane dispersion which is chain terminated is determined by dividing the mass of chain terminator by the sum of the other polyurethane components including the chain terminating agent. The urea content will be from 2 % by weight to 14.5 % by weight. The urea content can be optionally from 2.5 % by weight to 10.5 % by weight.

It is important that this urea group be the terminating group and there are no substituents in the chain terminating group that can lead to crosslinking.

The NCO prepolymer may also be terminated with polyamine chain extenders. Suitable polyamines for chain extension have an average functionality, i.e., the number of amine nitrogens per molecule, of 2 to 6. The desired functionalities can be obtained by using mixtures of polyamines containing primary or secondary amino groups. The polyamines are generally aromatic, aliphatic or alicyclic amines and contain between 1 to 30 carbon atoms. These polyamines may contain additional substituents provided that they are not as reactive with isocyanate groups as the primary or secondary amines. These same polyamines can be partially or wholly blocked polyamines. The polyamines may include 1-amino-3-aminomethyl-3,5,5-trimethylcyclohexane (isophorone diamine or IPDA), bis-(4-amino-cyclohexyl)-methane, bis-(4-amino-3-methylcyclohexyl)-methane, 1,6-diaminohexane, ethylene diamine, diethylene triamine, triethylene tetramine, tetraethylene pentamine and pentaethylene hexamine.

The amount of chain extender to be used in accordance with the present invention is dependent upon the number of terminal isocyanate groups in the prepolymer. The ratio of terminal isocyanate groups of the prepolymer to isocyanate-reactive groups of the chain extender is between about 1.0:0.6 and about 1.0:1.1. Any isocyanate groups that are not chain extended with an amine will react with water, which functions as a diamine chain extender. Chain extension can take place prior to addition of water in the process, but typically takes place by combining the NCO prepolymer, chain extender, water and other optional components under agitation.

In order to have a stable dispersion, a sufficient amount of the acid groups must be neutralized so that the resulting polyurethane will remain stably dispersed in the aqueous medium. Generally, at least 75%, optionally at least 90%, of the acid groups are neutralized to the corresponding carboxylate salt groups.

Suitable neutralizing agents for converting the acid groups to salt groups either before, during or after their incorporation into the NCO prepolymers, include tertiary amines, alkali metal cations and ammonia. Candidate neutralizing agents are the trialkyl-substituted tertiary amines, such as triethyl amine, tripropyl amine, dimethylcyclohexyl amine, and dimethylethyl amine.

Neutralization may take place at any point in the process. Typical procedures include at least some neutralization of the prepolymer, which is then chain extended in water in the presence of additional neutralizing agent.

The aqueous polymer dispersion has a solids content of polymers of up to 75% by weight, optionally 15 to 60% by weight. However, it is always possible to dilute the dispersions to any minimum solids content desired. Solids content can be determined by gravimetric means.

Within another preferred embodiment of the present invention, the environmentally stable organic pigment dispersion is obtained by heating and mixing an aqueous organic pigment formulation with an aqueous polymer dispersion for preferably equal or less than 24 h, preferably equal or less than 8 h, preferably equal or less than 4h more preferably equal or less than 2 h and most preferably equal or less than 1h at temperatures preferably higher than 40°C, preferably higher or equal than 60°C, more preferably higher or equal than 70°C, more preferably higher or equal than 75°C and most preferably higher or equal than 80°C but preferably lower than 100°C, more preferably lower than 90°C and most preferably lower than 85°C.

The organic pigment dispersion has a solid pigment content of preferably between 10 and 80 % by weight, preferably between 20 and 70 % by weight, more preferably between 30 and 60 % by weight and most preferably between 40 and 55 % by weight. The polymer content in the dispersion is preferably between 10 and 80 % by weight, more preferably between 20 and 60 % by weight and most preferably between 30 and 50 % by weight. The solid content is measured by gravimetric means.

Accordingly, the method to prepare an environmentally stable organic pigments dispersion comprising the steps of
(a) dispersing an organic pigment using a wetting or dispersing agent in water wherein the wetting and dispersing agent is selected from the group consisting of anionic, cationic or non-ionic bulk polymer, solution polymer or a water-dispersible polymer and wherein the polymeric dispersant has a number average molecular weight of 1,000 to 20,000 Daltons;
(b) adding at least one aqueous polymer dispersion to the dispersed organic pigment of step (a) to form a first dispersed organic pigment/polymer dispersion/aqueous mixture and wherein the aqueous polymer dispersion is comprised of any one or a combination of acrylic, polyester, polyurethane, polyester-polyurethane, epoxy resin, vinyl chloride resin, vinyl ester resin, ethylene vinyl ester, styrene, styrene acrylic resin, styrene acrylonitrile resin, polyimide, polycarbonate, amino resin, phenolic resin, polysulfide, urea resins, polyethylene (meth) acrylic acid copolymers, carboxylated polybutadiene, perfluorinated sulfonic acid polymers.
(c) heating the first dispersed organic pigment/polymer dispersion/aqueous mixture under stirring to form an environmentally stable organic pigment dispersion.
(d) optionally removing the water from the environmentally stable organic pigment dispersion to obtain dried environmentally stable organic pigments.

The sequence of all steps results in environmentally stable organic pigments where the resin is at least partially attached to the organic pigment.

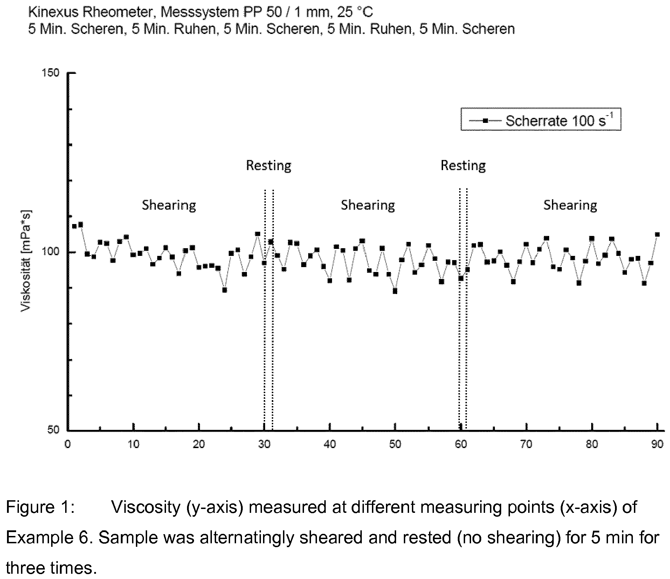

Within the present invention a change in the rheological behaviour is used to confirm the successful synthesis of the environmental stabilization of the organic pigment. When an aqueous organic pigment dispersion and an aqueous polymer dispersion are mixed together and heated to temperatures of at least 40°C and up to 100°C, preferably at least 50°C and up to 90°C, in particular at least 65 and up to 85°C for at least 1 min up to 10 hours, preferably at least 10 min up to 5 hours, in particular preferred at least 30 min up to 3 hours, they form newly invented environmental stable pigments. Investigations of their rheological behaviour in a rheometer in a plate-plate configuration reveal a relatively low viscosity (between 50 mPa*s and 200 mPa*s at a shear rate of 100 s⁻¹) and no change in viscosity during applied shear and without any shear (rest) (Figure 1).

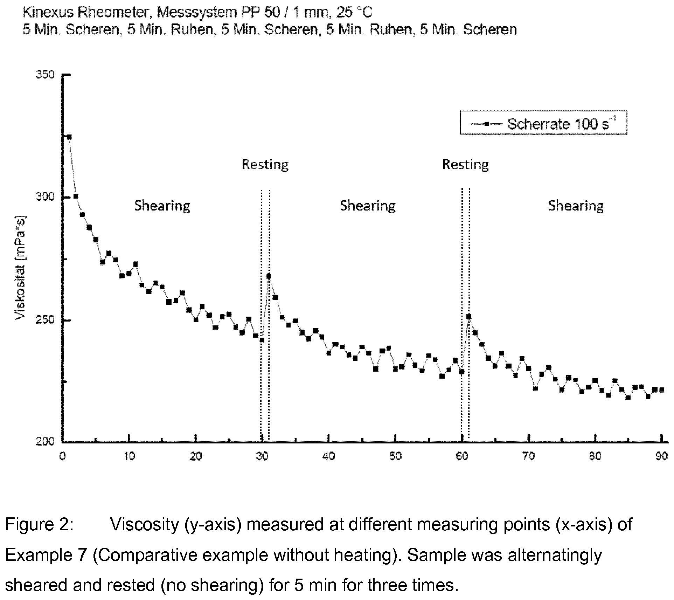

On the other hand, when an aqueous organic pigment dispersion and an aqueous polymer dispersion are mixed together at room they form a pure mixture of the two materials (Comparative Example 7) and their rheological behaviour is completely different from the environmental stable organic pigments. Investigations of their rheological behaviour in a rheometer in a plate-plate configuration reveal a higher viscosity between 325 s⁻¹ and 225 s⁻¹ at the same shearing rate of 100 s⁻¹ accompanied by a shear thinning viscosity over time of shearing (5 min). A stop of the shearing (resting period) of this mixture for 5 min results in a slight increase of viscosity. Continued shearing for another 5 min reveals the same shear thinning behaviour. This cycle can be repeated many times (Figure 2).

### Dispersion of the organic pigment particles

The dispersing step for the aqueous organic pigments dispersion may be accomplished by high energy mixers such as rotor-stator apparatus, colloid mills or high pressure homogenizers or at low energy using devices such as magnetic stirrers or membrane emulsification. Combinations of dispersing equipment may be used. It may be more convenient to mix organic pigment particle and polymeric dispersant in a high speed disperser followed by milling using milling beads or a microfluidizer.

One way to monitor the progress of the dispersion process is to measure the particle size and set a target value for the final D50 of the mixture. For typical pigments used for facade paints the target value of the D50 is 10 µm or less, preferably less than 5 µm. Also the D90 value for the pigment dispersions is preferably smaller than 100 µm, preferably smaller than 50 µm, more preferably less than 20 µm and most preferably less than 10 µm.

The organic pigments may be used in dry or wet form. For example, pigments are usually manufactured in aqueous media and the resulting pigment is obtained as water-wet presscake. In presscake form, the pigment is not agglomerated to the extent that it is in dry form. Thus, pigments in water-wet presscake form do not require as much deflocculation in the process of preparing the dispersed organic pigments as pigments in dry form (pigment powder).

### Other Additives

Other additives, such as biocides, humectants, chelating agents, color improvers and viscosity modifiers, may be added to the environmentally stable organic pigment dispersions for conventional purposes.

The final composition according to the present invention is used for exterior decorative coating, interior decorative coating, automotive coating and industrial application coating, but most preferably for exterior decorative coating.

The final composition according to the present invention could be applied in different kind of coating systems. Examples of coating systems include but are not limited to silicone based coatings and silicate paints, acrylic coatings, styrene-acrylic coatings, alkyd coatings and titan dioxide dispersions.

The final composition according to the present invention could also be applied in a lacquer system or a varnish.

Based on accelerated weather fastness tests using an accelerated testing equipment, which exposes the tested coating formulations through different weather cycles varying temperature, humidity and UV intensity, when the final composition is applied in one of the coating systems described above, the resulting colour presents increased weather fastness compared to the same coating system entailing a pigment preparation containing the corresponding non-stabilized organic pigments. Details of this accelerated weather fastness test are described below.

Notably, the final composition presenting increased weather fastness (ISO 16474-2, Paints and varnishes - Methods of exposure to laboratory light sources - Part 2: Xenon-arc lamps) in silicone based coatings entails a dE ≤ 7, more preferably dE ≤ 6 and most preferably dE ≤ 4 after 2000 hours accelerated weather fastness (see Table 2). dE refers to the International Commission on Illumination (CIE) based on their CIELAB colour space and is measured according to DIN EN ISO 11664-4.

To study the oxidation fastness, the final composition containing the environmentally stable organic pigment is applied in a spackling paste chosen for its extreme oxidative character and placed for 6 weeks in an oven dryer at 50°C. It was observed that the composition containing environmentally stable organic pigments is more resistant to oxidation compared to the spackling paste entailing a similar composition containing the corresponding non-stabilized organic pigments.

Notably, the resulting colour of the final composition, when applied in a spackling paste and left for 6 weeks in an oven dryer at 50°C, does not lose more than 40% and most likely more than 20% of its initial colour strength. Moreover, the final composition presents a dE ≤ 3.5, more preferably dE ≤ 3.0 and most preferably dE ≤ 2.5 after 6 weeks in an oven dryer at 50°C (See Table 3).

In the following examples all units are given in weight percent (wt-%) unless otherwise stated.

### Example 1: Formation of pigment preparation from presscake

To 3088.5 g of presscake of diketopyrrolopyrrole-pigment (Hostaperm Red® D3G70) containing 42.8 wt-% dry pigment are added 129.1 g of Dispersogen® PTS and 52.5 g of water. This pigment dispersion is "pre-dispersed" using a high shear agitation apparatus (Dispermat, Getzmann, AE03) for 30 minutes at 2000 rpm and then milled using a bead mill apparatus (MiniCer, Netzsch) using Silibeads (0.6-0.8mm) for 2 hours at 2000 rpm. The pigment has an average particle size (D50) of 0.17 micron.

### Example 2: Formation of pigment preparation from pigment powder

To 492.4 g of diketopyrrolopyrrole-pigment powder (Hostaperm® Red D3G70) are added 44.3 g of Dispersogen® PTS and 663.4 g of water. This pigment dispersion is "pre-dispersed" using a high shear agitation apparatus (Dispermat, Getzmann, AE03) for 30 minutes at 2000 rpm and then milled using a bead mill apparatus (MiniCer, Netzsch) using Silibeads (0.6-0.8mm) for 2 hours at 2000 rpm. The pigment has an average particle size (D50) of 0.2 micron.

### Example 3

To 2000.0 g of pigment preparation of Example 1 is added 478.3 g of Baybond® PU 406 and 2.0 g of Dispersogen® PTS. After mixing for 1 hour at room temperature, the mixture is heated to 80°C and stirred for 8 hours. After cooling down to room temperature a liquid dispersion of environmentally stable organic pigment is obtained. The product may be used as liquid dispersion (44.2 wt-% dry content) or dried for use in this form or it may be further treated by methods well known in the art.

### Example 4 (Comparative example without stabilization)

To 2000.0 g of pigment preparation of Example 1 is added 2.0 g of Dispersogen® PTS. After mixing for 1 hour at room temperature, the mixture is stirrer for 8 hours at room temperature. The product may be used as liquid dispersion (42.4 wt-% dry content) or dried for use in this form or it may be further treated by methods well known in the art.

### Example 5

The procedure of Example 3 is followed except that 673.6 g of Baybond® PU 406 is added to 1126.6 g Hostaperm® Red D3G70 pigment preparation containing 1.1 g Dispersogen® PTS. The environmentally stable organic pigment dispersion obtained after the heating/cooling cycle (as described in Example 3) may be used as liquid dispersion (41.5 wt-% dry content) or dried for use in this form or it may be further treated by methods well known in the art.

### Example 6

To 415 g of pigment preparation of Example 2 is added 100.0 g of Baybond® PU 406 and 1.7 g of Dispersogen® PTS. After mixing for 10 min at room temperature, the mixture is heated to 80°C and stirred for 2 hours. After cooling down to room temperature a liquid dispersion of environmentally stable organic pigment is obtained. The product may be used as liquid dispersion (43.4 wt-% dry content) or dried for use in this form or it may be further treated by methods well known in the art.

### Example 7 (Comparative example without heating)

To 415 g of pigment preparation of Example 2 is added 100.0 g of Baybond® PU 406 and 1.7 g of Dispersogen® PTS. After mixing for 10 min at room temperature, the mixture is stirred for 2 hours at room temperature. The product may be used as liquid dispersion (42.4 wt-% dry content) or dried for use in this form or it may be further treated by methods well known in the art.

### Example 8

To 950 g of pigment preparation of Example 2 is added 264.3 g of Takelac® W-6061 and 3.9 g of Dispersogen® PTS. After mixing for 10 min at room temperature, the mixture is heated to 80°C and stirred for 2 hours. After cooling down to room temperature a liquid dispersion of environmentally stable organic pigment is obtained. The product may be used as liquid dispersion (42.0 wt-% dry content) or dried for use in this form or it may be further treated by methods well known in the art.

### Example 9

To 950 g of pigment preparation of Example 2 is added 264.3 g of Takelac® W-5100 and 3.9 g of Dispersogen® PTS. After mixing for 10 min at room temperature, the mixture is heated to 80°C and stirred for 2 hours. After cooling down to room temperature 250 g of water is added and a liquid dispersion of environmentally stable organic pigment is obtained. The product may be used as liquid dispersion (33.0 wt-% dry content) or dried for use in this form or it may be further treated by methods well known in the art.

### Example 10

The procedure of Example 1 is followed except that 156.2 g of Chemipearl® S200 is added to 400.0 g Hostaperm® Red D3G70 pigment preparation containing 1.7 g Dispersogen® PTS. The product obtained after the heating for 2 hours at 80°C and cooling down may be used as liquid dispersion (55.0 wt-% dry content) or dried for use in this form or it may be further treated by methods well known in the art.

### Example 11

The procedure of Example 1 is followed except that 103.0 g of Chemipearl® V200 is added to 400.0 g Hostaperm® Red D3G70 pigment preparation containing 1.7 g Dispersogen® PTS. The product obtained after the heating for 2 hours at 80°C and cooling down may be used as liquid dispersion (61.1 wt-% dry content) or dried for use in this form or it may be further treated by methods well known in the art.

**Table 1: Properties of environmentally stable organic pigments**

| Example | Solid content (%) | CS (in Thermosan) (%) | D50 (µm) | D90 (µm) |
|---|---|---|---|---|
| Example 4 (Comparative example without stabilization) | 40.9 | 105.4 | 0.19 | 0.32 |
| Example 7 (Comparative example without heating) | 42.4 | 82.5 | 2.60 | 5.45 |
| Example 3 | 44.2 | 77.0 | 0.31 | 1.67 |
| Example 5 | 41.5 | 65.7 | 1.20 | 4.49 |
| Example 8 | 42.0 | 39.8 | 1.83 | 4.58 |
| Example 9 | 33.0 | 41.2 | 1.48 | 2.55 |
| Example 10 | 55.0 | 91.0 | 0.18 | 0.29 |
| Example 11 | 61.1 | 93.4 | 0.18 | 0.30 |

Table 1 shows the results of the invented environmentally stable organic pigments. Due to the presence of the polymer on the surface of the pigment, the size increases (D50 and D90 values) and the colour strength decreases.

**Table 2: Weather fastness results - Change in coloristic (dE) over time**

| Example | dE in Thermosan® NQG (silicone paint) | | | |
|---|---|---|---|---|
| | 500h | 1000h | 1500h | 2000h |
| Example 4 (Comparative example without stabilization) | 0.6 | 1.4 | 2.8 | 5.0 |
| Example 7 (Comparative example without heating) | 0.4 | 1.6 | 3.4 | 5.7 |
| Example 3 | 1.5 | 0.6 | 1.1 | 3.7 |
| Example 5 | 1.7 | 1.0 | 0.9 | 2.8 |
| Example 9 | 1.1 | 0.7 | 1.1 | 2.3 |

Table 2 clearly demonstrates the effect of the environmentally stabilized organic pigments compared to their unstabilized pigments comparative Example 4 (without polymer) and 7 (without heating step).

**Table 3: Accelerated oxidation fastness results - Change in coloristic (CS and dE) over time**

| Example | Oxidation in Stucco di Luce | | | |
|---|---|---|---|---|
| | 3 weeks | | 6 weeks | |
| | CS (%) | dE | CS (%) | dE |
| Example 4 (Comparative example without stabilization) | 78 | 1,7 | 61 | 3,7 |
| Example 7 (Comparative example without heating) | 83 | 1,4 | 69 | 3,1 |
| Example 3 | 88 | 1,0 | 75 | 2,5 |
| Example 5 | 86 | 1,3 | 82 | 2,4 |

Table 3 clearly demonstrates the effect of the environmentally stable organic pigments compared to their unstabilized pigments comparative Example 4 (without polymer) and 7 (without heating).

Figure 1 and 2 show the different rheological behaviours of samples with (Example 6) and without heating (comparative Example 7), respectively. Samples, which are pure mixtures of pigments and polymer dispersion without the heating step exhibit a much higher viscosity and show shear thinning behaviour. Samples of the invented environmental stable organic pigments exhibit lower comparative viscosities at the same shear rate and do not show shear thinning behaviour.

### Instruments

Pigment preparations were obtained by predispersing pigments using high shear agitation apparatus Dispermat AE03 (Getzmann) followed by milling using a bead mill apparatus MiniCer (Netzsch) using Silibeads (0.6-0.8mm).

Particle size distribution were measured on a Malvern Mastersizer 2000, where the distribution is determined by the D-Values D50 and D90, which are the intercepts for 50 % and 90 % of the cumulative mass.

The rheological properties were measured on a Malvern Kinexus Pro equipped with a plate-plate configuration at 25°C. The diameter of the plates was 50 mm and the messuring gap was 1 mm. The measurement was carried out in five steps:
1. Shear rate: 100 s⁻¹ for 300 s (shearing)
2. Shear rate: 0 s⁻¹ for 300 s (resting)
3. Shear rate: 100 s⁻¹ for 300 s (shearing)
4. Shear rate: 0 s⁻¹ for 300 s (resting)
5. Shear rate: 100 s⁻¹ for 300 s (shearing)

### Determination of colour strength

All the samples are tested in a silicone based coating (Thermosan NQG, DAW) and their colour strength is compared to a standard. The standard corresponds to a commercial product (Colanyl® Red D3GD 500, Clariant) containing the same pigment as in the Examples 1-11, whereby the pigment is not stabilized by a polymer. Each pigment preparation (Examples 1-11), as well as the standard, is then mixed with Thermosan NQG in a way that the final coloured coating has a pigment content of 0.5% by weight. Mixing is achieved for 3 minutes at 3500 rpm using a SpeedMixer™ (DAC 150.1 FVZ, Hauschild Engineering). The coloured coating is then applied on a test card (Chromolux® 200) using a film applicator with 200 µm gap height (RK K Control Coater, Erichsen). The test card is then dried at 40°C for approximatively 25 minutes and then at room temperature for 40 minutes. When the coating is dried on the card, the colour strength is then measured in comparison to Colanyl® Red D3GD 500 using a colorimeter (Datacolor® remission spectrophotometer Spectraflash SF 600 PLUS CT, Datacolor International).

### Weather fastness test

The accelerated weather is carried out in accordance with DIN EN ISO 11341. 1/3 and 1/25 of standard depth are considered for the weather fastness tests performed using a silicon based coating (Thermosan® NQG). For instance 1/25 standard depth means that 1 part of coloured pigment preparations must be mixed with the necessary amount of Thermosan® NQG to reach 1/25 of the depth of a defined standard (Colanyl® Red D3GD 500). When the right dosage is found, the coloured coating is then applied onto a weather fastness plaque and put in the Ci5000 Weather-Ometer® (Atlas) for at least 2000 hours following the standard weather fastness circle ISO 16474-2 (Paints and varnishes - Methods of exposure to laboratory light sources - Part 2: Xenon-arc lamps). All the changes in coloristic (dE) are measured over time using a colorimeter (Datacolor® remission spectrophotometer Spectraflash SF 600 PLUS CT, Datacolor international) and summarised in Table 2.

### Accelerated oxidation fastness

A spackling paste (Stucco Di Luce) is chosen for its extreme oxidative character to assess the resistance against oxidation of the environmentally stable organic pigments contained in Examples 1-11 compared to the unprotected pigment contained in the standard (Colanyl® Red D3GD 500, Clariant). Each pigment preparation (Examples 1-11), as well as the standard, is then mixed with StuccoDecor Di Luce in a way that the final coloured coating has a pigment content of 1.5% by weight. Mixing is achieved for 2 minutes at 3000 rpm using a SpeedMixer™ (DAC 150.1 FVZ, Hauschild Engineering). The coloured coating is applied onto a card using a film applicator with 200 µm gap height (RK K Control Coater, Erichsen) and dried at room temperature. The card are placed in an oven dryer at 50°C for 6 weeks. All the changes in coloristic (dE) and colour strength are measured after 3 and 6 weeks using a colorimeter (Datacolor® remission spectrophotometer Spectraflash SF 600 PLUS CT, Datacolor International) and summarised in the Table 3

### Chemicals and materials

Hostaperm® Red D3G 70 press cake - Clariant Plastics & Coatings (Germany) GmbH Hostaperm® Red D3G 70 powder- Clariant Plastics & Coatings (Germany) GmbH Colanyl® Red D3GD 500 - Clariant Plastics & Coatings (Germany) GmbH Dispersogen® PTS - Clariant Products (Germany) GmbH is a nonionic, surfactant based dispersing agent for water-based pigment preparations, suitable for organic pigments and carbon blacks.
Baybond® PU 406 - Covestro AG (PU dispersion)
Takelac® W-6061 - Mitsui Chemicals, Inc. (PU dispersion)
Takelac® WS-5100 - Mitsui Chemicals, Inc. (PU dispersion)
Takelac® WBP-341 - Mitsui Chemicals, Inc. (PU dispersion)
Chemipearl® S200 - Mitsui Chemicals, Inc. (Ionomer dispersion)
Chemipearl® V200 - Mitsui Chemicals, Inc. (Non-ionic dispersion)
Thermosan® NQG - CAPAROL Farben Lacke Bautenschutz GmbH (silicone paint) Capadecor StuccoDecor Di Luce (Stucco di Luce) - CAPAROL Farben Lacke Bautenschutz GmbH

### List of abbreviations

- dE: Delta E (according to CIELAB coding and defined by DIN EN ISO 11664-4)
- CIE: International Commission on Illumination
- CS: colour strength
- UV: ultra violet
- PU: polyurethane
- NCO: isocyanate
- IPDI: isophorone diisocyanate
- IPDA: isophorone diamine
- Mn: number average molecular weight
- D50: average particle size determined by the D-Values D50, which is the intercepts for 50 % of the cumulative mass
- D90: average particle size determined by the D-Values D90, which is the intercepts for 90 % of the cumulative mass

## Claims

1. Environmentally stable organic pigment which is modified by a polymer and **characterized by** a change of Delta E (dE) of less than 5 after 2000 h simulated accelerated weathering measured according to DIN EN ISO 11341 in silicone paint.

2. Environmentally stable organic pigment according to claim 1, wherein the organic pigment is chosen from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments.

3. Environmentally stable organic pigment according to claim 1 or 2, wherein the polymer is a the bulk polymer, solution polymer or a water-dispersible polymer.

4. Aqueous organic pigment dispersion comprising a pigment according to claim 1 which is dispersed in water in the presence of a wetting or dispersing agent and a carrier.

5. Aqueous organic pigment dispersion according to claim 4 which comprises a surfactant.

6. Aqueous organic pigment dispersion according to claim 4 or 5 wherein the wetting or dispersing agent may be used as single component or as a mixture of different wetting and/or dispersing agents.

7. Aqueous organic pigment dispersion according to at least one of the preceding claims 4-6, wherein the dispersing agent represents at least 0.1 and up to 25 % by weight of the organic pigment particle weight.

8. Aqueous organic pigment dispersion according to at least one of the preceding claims 4 - 7, wherein pigment is modified with an acrylic, polyester, polyurethane, polyester-polyurethane, epoxy resin, vinyl chloride resin, vinyl ester resin, ethylene vinyl ester, styrene, styrene acrylic resin, styrene acrylonitrile resin, polyimide, polycarbonate, amino resin, phenolic resin, polysulfide, urea resins, polyethylene (meth) acrylic acid copolymers, carboxylated polybutadiene or a perfluorinated sulfonic acid polymer or a combination of these polymers.

9. Aqueous organic pigment dispersion according to at least one of the preceding claim 4 - 8, wherein the solid pigment content is in the range from 10 and 80 % by weight.

10. Aqueous organic pigment dispersion according to at least one of the preceding claim 4 - 9, wherein the polymer content is in the range from 10 and 80 % by weight.

11. Method to prepare an environmentally stable organic pigments dispersion according to claim 4, which comprising the steps of
(a) dispersing an organic pigment using a wetting or dispersing agent in water;
(b) adding at least one aqueous polymer dispersion to the dispersed organic pigment of step (a) to form a first dispersed pigment/polymer resin/aqueous mixture and
(c) heating the first dispersed pigment/polymer resin/aqueous mixture under stirring to form an environmentally stable organic pigment dispersion.
(d) optionally removing the water from the environmentally stable organic pigment dispersion to obtain dried environmentally stable organic pigments.

12. Method according to claim 11, wherein the wetting and dispersing agent is selected from the group consisting of anionic, cationic or non-ionic bulk polymer, solution polymer or a water-dispersible polymer.

13. Method according to claim 11 or 12, wherein the polymeric dispersant has a number average molecular weight of 1,000 to 20,000 Daltons.

14. Method according to at least one of the preceding claims 11 to 13, wherein the D50 value is 10 µm or less.

15. Method according to at least one of the preceding claims 11 to 14, wherein the progress of the dispersion is monitored until the target value for the D50 value is reached.

16. Method according to at least one of the preceding claims 11 to 15, wherein the dispersed pigment/polymer resin/aqueous mixture is heated up to a temperature up to 80°C in step (c).

17. Use of the environmental stable pigment of claim 1 and/or the pigment dispersion of claim 4 for pigmenting exterior or interior decorative coatings, automotive coatings or industrial coatings
